(19) Europäisches Patentamt
European Patent Office
Office européen des brevets

(11) Veröffentlichungsnummer: **0 074 080**
**B1**

(12) # EUROPÄISCHE PATENTSCHRIFT

(45) Veröffentlichungstag der Patentschrift: **02.01.86**

(51) Int. Cl.$^4$: **C 08 G 18/28**, C 08 J 3/20, B 01 F 17/00, C 09 B 67/00

(21) Anmeldenummer: **82108041.3**

(22) Anmeldetag: **01.09.82**

(54) **Additionsverbindungen, Verfahren zu ihrer Herstellung und ihre Verwendung.**

(30) Priorität: **05.09.81 DE 3135327**

(43) Veröffentlichungstag der Anmeldung: **16.03.83 Patentblatt 83/11**

(45) Bekanntmachung des Hinweises auf die Patenterteilung: **02.01.86 Patentblatt 86/01**

(84) Benannte Vertragsstaaten: **BE CH DE FR GB IT LI**

(56) Entgegenhaltungen:
**DD-A- 151 465**
**DE-A- 2 312 301**
**DE-A- 2 438 414**
**DE-A- 3 018 715**
**GB-A- 1 153 308**
**US-A- 3 325 306**

(73) Patentinhaber: **HOECHST AKTIENGESELLSCHAFT**
**Postfach 80 03 20**
**D-6230 Frankfurt am Main 80 (DE)**

(72) Erfinder: **Dietz, Erwin, Dr.**
**In den Padenwiesen 30**
**D-6233 Kelkheim (Taunus) (DE)**
Erfinder: **Münkel, Albert**
**Sindlinger Bahnstrasse 127a**
**D-6230 Frankfurt am Main 80 (DE)**

**EP 0 074 080 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Additionsverbindungen, die aus Hydroxyalkylimidazolinen, Diisocyanaten und Polyolen erhältlich sind, weiterhin Verfahren zur Herstellung dieser Additionsverbindungen sowie deren Verwendung als Dispergatoren für Feststoffe in nichtwäßrigen Flüssigkeiten.

Geeignete Hydroxyalkylimidazoline zur Herstellung der erfindungsgemäßen Additionsverbindungen entsprechen folgender allgemeiner Formel

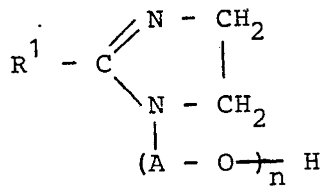

(1)

worin

$R^1$ für einen Alkyl-, Alkenyl- oder Alkapolyenylrest mit 6 bis 30 C-Atomen,
A für einen Alkylenrest mit 2 bis 6 C-Atomen und
n für eine Zahl von 1 bis 20 stehen.

Besonders geeignet sind Verbindungen der Formel (1), die als Rest $R^1$ aliphatische Reste natürlicher Fettsäuren und als A eine $—CH_2—CH_2$-Gruppierung enthalten und bei denen n = 1 ist.

Als geeignete Diisocyanate kommen Verbindungen folgender Formel in Betracht :

$$OCN—X—NCO \qquad (2)$$

worin X für einen zweiwertigen aromatischen oder araliphatischen Rest mit 6 bis 20 C-Atomen steht.

Geeignet sind beispielsweise Verbindungen, die als X eine Phenylen-, Toluylen-, Xylylen-, Naphthylen-, Diphenylen- oder Diphenylenalkan-Gruppierung enthalten.

Besonders hervorzuheben sind 2,4- und 2,6-Toluylendiisocyanat sowie deren Mischungen, Diphenylmethan-4,4'-diisocyanat und 1,5-Naphthalindiisocyanat.

Als Polyolkomponenten kommen aliphatische Verbindungen in Frage, die mindestens zwei Hydroxygruppen enthalten und folgender allgemeiner Formel entsprechen :

$$Y—[OH]_m \qquad (3)$$

In Formel (3) steht m für eine ganze Zahl von 2 bis 6 und Y für einen aliphatischen Rest mit mindestens 2 C-Atomen, der durch —O—, —N—, und —CO-Gruppen und deren Kombinationen unterbrochen sein kann. Besonders zu erwähnen sind 1,2-Ethandiol, 1,2- und 1,3-Propandiol, Butandiole, Hexandiole, Octandiole, Glycerin, Butantriole, Hexantriole, 1,1,1-Trimethylolpropan, 1,1,1-Trimethylolethan, Pentaerythrit, Butendiole, Hexendiole, Butindiole, Hexindiole sowie Additionsprodukte von Ethylen- und/oder Propylenoxid and die genannten Polyole einschließlich Polyethylen- und Polypropylenglykole und deren Mischpolymerisate, ferner Hydroxyalkylamine oder -amide folgender allgemeiner Formel :

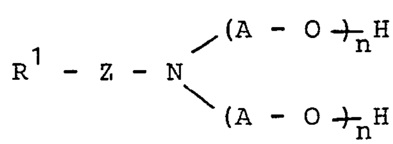

(4)

worin $R^1$, A und n die für Formel (1) beschriebenen Bedeutungen haben und Z für eine $—CH_2—$ oder —CO—Gruppierung stehen.

Die erfindungsgemäßen Additionsprodukte lassen sich nach folgenden Verfahren herstellen : Das Diisocyanat wird in einem inerten Lösungsmittel gelöst und mit dem Polyol umgesetzt. Dieses so erhaltene gelöste Additionsprodukt wird anschließend zu der Hydroxyalkylimidazolin-Komponente zugegeben. Es kann jedoch auch das Hydroxyalkylimidazolin und das Polyol in einem inerten Lösungsmittel gelöst und das Diisocyanat je nach Konsistenz in Substanz oder in Lösung zugegeben werden. Die Reaktion ist beendet, wenn im IR-Spektrum keine Isocyanatbanden mehr zu beobachten sind.

Zur Herstellung der erfindungsgemäßen Additionsprodukte eigenen sich alle Lösungsmittel, die gegenüber den Reaktionspartnern inert sind und in welchen die Reaktanten und das erhaltene Reaktionsprodukt zumindest teilweise löslich sind. Zu erwähnen sind beispielsweise : Kohlenwaserstoffe, insbesondere Toluol und Xylole, chlorierte Kohlenwasserstoffe, insbesondere Methylenchlorid, Chloroform, Tetrachlorkohlenstoff, Trichloretan, Trichlorethen und Chlorbenzol, Ester wie Ethylacetat, Butylacetat, Glycolacetate, Ketone wie Methylethylketon, Methylisobutylketon und Cyclohexanon, Ether wie Diisopropylether, Dibutylether, Glycoldimethylether und Diglycoldimethylether, Ester aus Glycolethern

wie Ethylglycolacetat, Butylglycolacetat, Methylglycolacetat, 3-Methoxy-n-butylacetat, Butyldiglycolacetat sowie Säureamide wie N-Methylpyrrolidon und Dimethylformamid.

Die Reaktionen werden vorzugsweise bei Temperaturen von 0 bis 120 °C, insbesondere von 40 bis 100 °C durchgeführt. Die Lösungsmittel können je nach Siedepunkt und Anwendungsgebiet im Reaktionsgemisch verbleiben oder werden, z. B. destillativ, entfernt.

Eine weitere Möglichkeit zur Herstellung der erfindungsgemäßen Additionsverbindungen ist eine Durchführung der Reaktion mit oder ohne Lösungsmittel bei Temperaturen über 120 °C. Hierzu werden die Hydroxyalkylimidazolin-Verbindung und das Polyol allein oder in einem hochsiedenden, inerten Lösungsmittel vorgelegt und das Diisocyanat bei Temperaturen von 120 bis 200 °C zugegeben, wobei pro Mol Diisocyanat bis zu 1 Mol Kohlendioxid abgespalten wird.

Bei der Reaktionsführung ohne Lösungsmittel ist die Viskosität des Reaktionsmediums durch die Temperatur so zu steuern, daß eine gute Durchmischung gewährleistet ist. Aus diesem Grunde werden Reaktionsabläufe bevorzugt, bei denen die Temperatur während der Reaktion ansteigt, wobei die entstehende Reaktionswärme genutzt werden kann. Vorteilhafterweise werden deshalb die Hydroxyalkylimidazolin-Verbindung und das Polyol vorgelegt und auf 50 bis 120 °C erwärmt. Nach Zugabe des Diisocyanats, insbesondere Toluylendiisocyanat, wird die Reaktion bei Temperaturen von 150 bis 250 °C zu Ende geführt, wobei die bereits erwähnte Kohlendioxidabspaltung stattfindet.

Die Temperaturobergrenze sollte so gewählt werden, daß keine Zersetzung des Reaktionsprodukts eintritt.

Bevorzugte Additionsverbindungen werden erhalten, wenn m Mol Diisocyanat der Formel (2) mit einem Mol Polyol der Formel (3), welches m OH-Gruppen trägt, und m Mol Hydroxyalkylimidazolin der Formel (1) umgesetzt werden. Zum Erhalt von Isocyanatgruppen-freien Additionsverbindungen ist es sinnvoll, einen geringen Überschuß an Polyol oder Hydroxyalkylimidazolin einzusetzen. Werden Polyole mit 2 OH-Gruppen mit Toluylendiisocyanat zur Reaktion gebracht, so erhält man weitere bevorzugte, erfindungsgemäße Additionsverbindungen, wenn man a Mol eines zweiwertigen Polyols oder Formel (3) mit a + 1 Mol Toluylendiisocyanat und 2 Mol Hydroxyalkylimidazolin der Formel (1) umsetzt, wobei a für eine Zahl von 2 bis 5 steht.

Die erfindungsgemäßen Additionsprodukte eignen sich als Dispergatoren für Feststoffe, insbesondere für Pigmente und Füllstoffe in nicht-wäßrigen Medien.

Besonders hervorzuheben ist die Eignung der erfindungsgemäßen Additionsverbindungen zur Herstellung von Pigmentdispersionen. Derartige Pigmentdispersionen können anorganische und/oder organische Pigmente enthalten. Als Anorganische Pigmente eignen sich z. B. Weiß- und Buntpigmente wie Titanoxide, Zinkoxide, Zinksulfide, Cadmiumsulfide oder -selenide, Eisenoxide, Chromoxide, Chromatpigmente, als Pigmente geeignete Mischoxide aus den Elementen Aluminium, Antimon, Chrom, Eisen, Kobalt, Kupfer, Nickel, Titan und Zink sowie Verschnittpigmente und insbesondere Ruße.

Als geeignete organische Pigmente sind beispielsweise zu nennen : Azopigmente, Azamethine, Azaporphine, Chinacridone, Flavanthron-, Anthanthron- und Pyranthronkörper, Derivate der Naphthalintetracarbonsäure, der Perylentetracarbonsäure, des Thioindigos, des Dioxazins und des Tetrachlorisoindolinons, verlackte Pigmente wie Mg-, Ca-, Sr-, Ba-, Al-, Mn-, Co- und Ni-Salze von säuregruppenhaltigen Farbstoffen sowie entsprechende Pigmentmischungen.

Je nach Einsatzgebiet können die Feststoffe, insbesondere Pigmente, allein in den erfindungsgemäßen Additionsprodukten oder zusätzlich mit Hilfe der erfindungsgemäßen Additionsprodukte in nicht wäßrigen Flüssigkeiten dispergiert werden. Die Feststoffdispersionen können außer den erfindungsgemäßen Additionsverbindungen weitere übliche Zusatzstoffe wie Schaum- und Viskositätsregulatoren, Antiabsetzmittel, Netz- und Lösungsmitttel sowie nichtwäßrige Flüssigkeiten enthalten.

Als nichtwäßrige Medien zur Herstellung von flüssigen Dispersionen haben nich die Lösungsmittel und Flüssigkeiten bewährt, die auch auf dem Kunststoff-, Druck- und Anstrichsektor eingesetzt werden, und in welchen sich die erfindungsgemäßen Additionsprodukte zumindest teilweise lösen.

Als Beispiele für solche Lösungsmittel sind zu nennen : aromatische und aliphatische Kohlenwasserstoffe wie Xylol, Toluol, Petrolether, Testbenzin, Cyclohexan, halogenierte Kohlenwasserstoffe wie Methylenchlorid, Trichlorethylen, Trichlorethan oder Chlorbenzol, Alkohole wie Ethanol, Butanol oder Cyclohexanol, Ketone, wie Ethylmethylketon oder Cyclohexanon, Ester wie Ethyl- und Butylacetat, Glykolether und -ester, wie Ethylglykol, Butylglykol, Ethyldiglykol, Ethyl- und Butyldiglykolacetat, Hexyldiglycol und Ethylenglykolacetat, Säureamide, wie N-Methylpyrrolidon und Dimethylformamid, sowie auch Mischungen dieser Lösungsmittel.

Weiterhin geeignet sind schwerflüchtige Lösungsmittel und Weichmacher, wie sie in der Kunststoff- und Lackindustrie üblich sind, beispielsweise Alkyl- und/oder Arylester zwei- oder mehrbasischer Säuren wie Maleinsäure, Bernsteinsäure, Adipinsäure, Sebacinsäure, Phthalsäure, Terephthalsäure und Phosphorsäure, Alkylphenole sowie deren Reaktionsprodukte mit Ethylen- und/oder Propylenoxid. Es können jedoch auch Öle, wie Leinöl und Rizinusöl, sowie Fettsäuren, zum Beispiel Ölsäure und deren Ester verwendet werden. Besondere Eignung zur Herstellung von fließfähigen Pigmentdispersionen besitzen Addukte von Ethylen- und/oder Propylenoxid and Di- oder Triole.

Enthalten die Pigmentdispersionen flüchtige Lösungsmittel, so können sie in flüssiger oder auch getrockneter Form weiterverarbeitet werden. Je nach Bedarf können sie auch gemahlen werden, wobei leichtdispergierbare Pigmente erhalten werden.

Bevorzugte Dispersionen enthalten 2 bis 80 Gew.-%, vorzugsweise 10 bis 70 Gew.-%, Feststoffe, 0,2 bis 10 Gew.-%, vorzugsweise 0,5 bis 4 Gew.-%, der erfindungsgemäßen Additionsverbindungen und 20 bis 98 Gew.-%, vorzugsweise 30 bis 90 Gew.-%, nichtwäßrige Flüssigkeiten.

Die Herstellung der Feststoffdispersionen erfolgt je nach Kornhärte der eingesetzten Feststoffe beispielsweise mit Rührwerken, Dissolvern, Rotor-Stator-Mühlen, Kugelmühlen, Rührwerkskugelmühlen (Sand- oder Perlmühlen), in Schnellmischern, Knetapparaturen oder auf Walzenstühlen.

Feststoffdispersionen, welche die erfindungsgemäßen Additionsprodukte enthalten, besitzen eine hohe Stabilität und einen hohen Feststoffgehalt bei gleichzeitig guten rheologischen Eigenschaften.

Werden als Feststoffe organische Pigmente, anorganische Pigmente und/oder Ruße eingesetzt, so werden Dispersionen erhalten, die vielseitig verwendbar sind.

Sie eignen sich beispielsweise zum Pigmentieren von Anstrichmedien und Kunststoffen, insbesondere Polyurethanschaumstoffen. Die guten Dispergiereigenschaften der erfindungsgemäßen Additionsverbindungen führen zu Pigmentdispersionen mit hoher Färbekraft und Brillanz. Pigment-dispersionen mit den erfindungsgemäßen Additionsverbindungen zeichnen sich gegenüber Pigmentdispersionen ohne diesen Zusatz durch hohe Flockungsstabilität und gute Fließeigenschaften aus.

In den folgenden Herstellungsbeispielen bezeichnen Teile (Tle) Gewichtsteile, Prozentangaben und Verhältnisse beziehen sich auf das Gewicht.

### Beispiel 1

In 2 500 Tln Tetrachlorkohlenstoff wurden 700 Tle 2-[2-(8-Heptadecen-1-yl)-4,5-dihydro-1-imidazolyl]-ethanol und 62 Tle 1,2-Ethandiol gelöst. In die siedende Lösung wurden 340 Tle Toluylendiisocyanat, bestehend aus 80 % 2,4-Toluylendiisocyanat und 20 % 2,6-Toluylendiisocyanat, langsam zugegeben. Nach einer Reaktionszeit von 1 Stunde wurde das Lösemittel destillativ entfernt. Man erhielt ein hochviskoses, harzähnliches Produkt, das im IR-Spektrum keine NCO-Gruppen mehr aufweist.

### Beispiel 2

In 200 Tln Xylol wurden 35 Tle 2-[8-Heptadecen-1-yl)-4,5-dihydro-1-imidazolyl]-ethanol gelöst und auf 50 °C erwärmt. In diese Lösung wurden bei dieser Temperatur unter Rühren 36 Tle einer 67 %igen Lösung eines Reaktionsproduktes aus 3 Mol Toluylendiisocyanat und 1 Mol 1,1,1-Trimethylolpropan in Ethylglykolacetat/Xylol (1 : 1) zugegeben. Die Reaktionsmischung wurde 1 Stunde bei 80 °C nachgerührt.

### Beispiel 3

In 350 Tln Diglycoldimethylether wurden 350 Tle 2-[2-(8-Heptadecen-1-yl)-4,5-dihydro-1-imidazolyl]-ethanol und 67 Tle Dipropylenglycol gelöst und auf 70 °C erwärmt. Bei dieser Temperatur wurden unter Rühren 174 Tle Toluylendiisocyanat, bestehend aus 65 % 2,4-Toluylendiisocyanat und 35 % 2,6-Toluylendiisocyanat, zugesetzt. Die Reaktionsmischung wurde 1 Stunde bei 80 °C nachgerührt.

### Beispiel 4

In 830 Tln N-Methylpyrrolidon wurden 350 Tle 2-[2-(8-Heptadecen-1-yl)-4,5-dihydro-1-imidazolyl]-ethanol und 135 Tle 1,4-Butandiol vorgelegt und auf 45 °C erwärmt. Nun wurden 348 Tle Toluylendiisocyanat, bestehend aus 80 % 2,4-Toluylendiisocyanat und 20 % 2,6-Toluylendiisocyanat, so zudosiert, daß die Temperatur auf 75 °C anstieg. Die Reaktionsmischung wurde 1 Stunde bei 80 °C nachgerührt.

### Beispiel 5

350 Tle 2-[2-(8-Heptadecen-1-yl)-4,5-dihydro-1-imidazolyl]-ethanol und 31 Tle 1,2-Ethandiol wurden vorgelegt und auf 50 °C erwärmt. In diese homogene Lösung ließ man rasch 174 Tle Toluylendiisocyanat, bestehend aus 80 % 2,4-Toluylendiisocyanat und 20 % 2,6-Toluylendiisocyanat, zulaufen,wobei sich die Temperatur durch die entstehende Reaktionswärme auf ca. 160 °C erhöhte und starke Kohlendioxid-Entwicklung einsetzte. Nach Abklingen der Reaktion wurde 1 Stunde bei 175 °C nachgerührt. Insgesamt wurden 44 Tle Kohlendioxid abgespalten und man erhielt ein dunkles, harzartiges hochviskoses Reaktionsprodukt.

### Beispiel 6

350 Tle 2-[2-(8-Heptadecen-1-yl)-4,5-dihydro-1-imidazolyl]-ethanol und 31 Tle 1,2-Ethandiol wurden vorgelegt und auf 150 °C geheizt. Bei dieser Temperatur wurden 174 Tle Toluylendiisocyanat zudosiert, wobei Khlendioxid-Entwicklung einsetzte. Nach einer Reaktionszeit von 1 Stunde bei 175 °C, bei der 44 Tle Kohlendioxid frei wurden, gab man zum Reaktionsgemisch nochmals 31 Tle 1,2-Ethandiol und setzte die Reaktionsmischung wiederum mit 174 Tln Toluylendisocyanat um. Rührte man erneut 1 Stunde bei

175 °C nach, wurden weitere 44 Tle Kohlendioxid abgespalten. Man erhielt ein in der Kälte festes, harzähnliches Produkt.

Beispiel 7

385 Tle 2-[2-(1-Cocosfettalkyl*-4,5-dihydro-1-imidazolyl]-ethanol und 350 Tle eines Adduktes aus 5 Mol Ethylenoxid an Oleylamin wurden vorgelegt und auf 50 °C erwarmt. Nach Zugabe von 244 Tln Toluylendiisocyanat stieg die Temperatur auf 100 °C, während sich die Viskosität des Rekationsmediums stark erhöhte. Während einer Reaktionszeit von 1 Stunde bei 175 °C wurden 60 Tle Kohlendioxid frei.

Beispiel 8

490 Tle 2-[2-(8-Heptadecen-1-yl)-4,5-dihydro-1-imidazolyl]-ethanol und 210 Tle Cocosfettsäurediethanolamid* wurden vorgelegt und auf 55 °C erwärmt. Nach der Zugabe von 244 Tln Toluylendiisocyanat stieg die Temperatur auf 110 °C. Man ließ 1 Stunde bei 170 °C nachrühren, wobei 60 Tle Kohlendioxid abgespalten wurden.

Beispiel 9

350 Tle 2-[2-(8-Heptadecen-1-yl)-4,5-dihydro-1-imidazolyl]-ethanol und 245 Tle eines Adduktes aus 5 Mol Ethylenoxid an Oleylamin wurden in 555 Tln N-Methylpyrrolidon gelöst und auf 50 °C erwärmt. Anschließend wurde eine Suspension von 210 Tln 1,5-Naphthalindiisocyanat in 460 Tln N-Methylpyrrolidon zugegeben. Das Reaktionsgemisch wurde 1 Stunde bei 80 °C nachgerührt.

Beispiel 10

In 350 Tln Butyldiglykolacetat wurden 150 Tle eines Polyglycols mit einem mittleren Molgewicht 600, 28 Tlc Hexin-3-diol-2,5 und 350 Tle 2-[2-(8-Heptadecen-1-yl)-4,5-dihydro-1-imidazolyl]-ethanol gelöst und auf 150 °C erhitzt. Bei dieser Temperatur wurden 250 Tle 4,4'-Diphenylmethandiisocyanat zudosiert und anschließend 1 Stunde bei 175 °C nachgerührt. Bei der Reaktion wurden 24 Tle Kohlendioxid frei.

Beispiel 11

In 304 Tln eines verzweigten Polyethers mit einem mittleren Molgewicht von 4 800, der durch Umsetzung von 1 Mol 1,1,1-Trimethylolpropan mit 70 Mol Propylenoxid und 14 Mol Ethylenoxid erhalten wurde, wurden 8 Tle der Additionsverbindung aus Beispiel 1 gelöst und 88 Tle eines Furnace-Rußes mit einer BET-Oberfläche von 45 $m^2/g$ und 0,6 % flüchtigen Bestandteilen eingerührt. Die so erhaltene Rußsuspension wurde in einer Perlmühle mit Hilfe von Siliquarzitglasperlen von 1 mm Durchmesser 40 Minuten dispergiert. Man erhielt eine sehr gut fließfähige Rußdispersion mit einem Rußgehalt von 22 %, die sich vor allem für Polyurethanschaumeinfärbungen auf Etherbasis auszeichnet.

Beim Pigmentieren eines Polyurethan-Integralschaumes nach bekannten Verfahren wurde eine gleichmäßige, farbtiefe Einfärbung erzielt, ohne daß die Schaumstruktur gestört wurde.

Ersetzt man im beschriebenen Beispiel die eingesetzte Additionsverbindung durch das Polyol, so ist die Rußsuspensionnicht mahlbar. Eine mahlbare Konsistenz wird nur bis zu einem maximalen Rußgehalt von 18 % erreicht.

Beispiel 12

468 Tle eines verzweigten Polyethers mit einem Hydroxylwert von 36 mg KOH/g und einer Viskosität bei 20 °C von 1,2 Pas wurden mit 12 Tln der reinen Additionsverbindung (Lösungsmittel wurden destillativ im Vakuum entfernt) aus Beispiel 2 vermischt. In die so erhaltene Lösung wurden anschließend 120 Tle eines anoxidierten Gasrußes mit einer mittleren Teilchengröße von 25 nm und einem pH-Wert von 3,0 (in wäßriger Suspension) eingerührt. Die entstandene Rußsuspension wurde mit Hilfe von Siliquarzitglasperlen von 1 mm Durchmesser 30 Minuten in einer Perlmühle dispergiert. Man erhielt eine sehr gut fließfähige, flockungsstabile Rußdispersion. Die beschriebene Rußsuspension ist nicht mahlbar, wenn man die eingesetzte Additionsverbindung durch den Polyether ersetzt.

Beispiel 13

30 Teile eines Furnacerußes mit einer mittleren Teilchengröße von 50 nm und einem pH-Wert (in

---

*) Die zur Herstellung dieser Verbindung eingesetzte Cocosfettsäure besitzt folgende ungefähre C-Ketten-Verteilung :

5 % C8, 6 % C10, 52 % C12, 20 % C14, 9 % C16, 2 % C18, 4 % C18 (einfach ungesättigt) und 2 % C18 (zweifach ungesättigt).

wäßriger Suspension) von 3 wurden mit 2 Teilen des Additionsprodukts aus Beispiel 5 und 28 Teilen Dioctylphthalat in einem Kneter 1 Stunde dispergiert. Anschließend wurde die Knetmasse mit 40 Teilen Dioctylphthalat zu einer fließfähigen Rußdispersion verdünnt, welche sich leicht in eine Polyvinylchlorid-Streichpaste einrühren ließ, die 1 Teil stabilisiertes Rutiligment, 59,3 Teile eines verpastbaren Emulsions-PVC mit einem K-Wert nach DIN 53 726 von 72, 39,6 Tle Dioctylphthalat und 0,1 Teile Stabilisator enthielt. Die 1 %ig eingefärbte Streichpaste wurde auf Glanzkarton aufgezogen und 5 min auf 160 °C erhitzt ; es wurde eine farbstarke Färbung erhalten.

Vergleichbare Ergebnisse werden erzielt, wenn in Beispiel 13 die 2 Tle des Additionsproduktes aus Beispiel 5 durch 2 Teile des Additionsproduktes aus Beispiel 6 ersetzt werden. Werden dagegen in Beispiel 13 2 Teile des Additionsproduktes aus Beispiel 5 durch 2 Teile Dioctylphthalat ersetzt, so wird eine nicht fließfähige Rußpaste erhalten, die in der PVC-Streichpaste zu einer Färbung mit geringerer Farbstärke im Vergleich zu der Färbung des Beispiels 13 führt.

Beispiel 14

200 Tle C.I. Pigment Blue 15 : 3 (Colour Index No. 74 160) wurden mit einem Sägezahnrührer in 754 Teile eines Addukts von 57 Mol Propylenoxid und 13 Mol Ethylenoxid an 1 Mol Glycerin und 46 Teilen der Lösung des Additionsprodukts aus Beispiel 9 eingerührt und anschließend mit einer Perlmühle dispergiert. Die auf diese Weise hergestellte, fließfähige Pigmentdispersion eignete sich besonders zum Einfähige Pigmentdispersion eignete sich besonders zum Einfärben von Polyurethan-Schaumstoffen und führte zu brillanten und farbstarken Einfärbungen.

Beispiel 15

Entsprechend Beispiel 14 wurde eine Pigmentdispersion hergestellt, die folgende Bestandteile enthielt : 30 Tle des in Beispiel 13 beschriebenen Furnacerußes, 2 Tle des Additionsproduktes aus Beispiel 7 und 68 Teile Butyldiglycolacetat. Diese Rußdispersion wurde in 1 %iger Konzentration in eine Fassadenfarbe aus Basis eines Vinyltoluol-Acrylat-Copolymeren, enthaltend 15 Tle stabilisiertes Rutilpigment, 34 Tle Verschnittpigmente (vorwiegend Dolomit), 7 Tle eines handelsüblichen, für Fassadenfarben geeigneten Vinyltoluolacrylatcopolymeren, 14 Teile einer 10 %-igen Lösung eines handelsüblichen, für Fassadenfarben geeigneten modifizierten Vinyltoluolacrylatcopolymeren in einem Gemisch aus aromatischen und aliphatischen Kohlenwasserstoffen, sowie 30 Tle einer Mischung aus Stabilisierungsmittel, Chlorparaffin und Testbenzin, eingerührt und auf Glanzkarton aufgezogen, es wurden Färbungen mit hoher Farbstärke erhalten, die keinerlei Flokkungserscheinungen aufwiesen.

Beispiel 16

2 Tle C.I. Pigment Red 168 (Colour Index No. 59 300) wurden zusammen mit 1 Teil des Additionsprodukts aus Beispiel 1 in einem auf 80 °C geheizten Kneter dispergiert. Nach einer Dispergierzeit von 1 Stunde wurde die Knetmasse abgekühlt und gemahlen. Es wurde eine pulverförmige, nichtstaubende Pigmentpräparation erhalten. Diese Präparation wurde in 1 %iger Konzentration mit einem Sägezahnrührer in einen lufttrocknenden Alkydharzlack, enthaltend 30 Tle stabilisiertes Rutilpigment, 37,5 Tle von langöligen Alkydharzen auf Basis pflanzlicher Fettsäuren, 32,5 Tle einer Mischung aus Trockenstoffen, Stabilisierungsmitteln, Testbenzin und Kristallöl, eingerührt und auf Glanzkarton aufgezogen ; es wurden stippenfreie, brillante Färbungen erhalten, die keinerlei Flockungserscheinungen erkennen ließ.

Beispiel 17

Zu Vergleichzwecken wurde eine Titandioxid-Paste, bestehend aus 650 Tln $TiO_2$ und 350 Tln eines verzweigten Polyethers mit einem mittleren Molgewicht von 6 500 und einer Viskosität bei 25 °C von 1 275 mPas hergestellt. 96 Tle der hergestellten Paste wurden mit 4 Tln des Polyethers gemischt und eine dynamische Viskosität bei $n = 62{,}5\ s^{-1}$ von 13,6 Pas gemessen. Im Vergleich dazu wurden 96 Tle der hergestellten Paste mit 4 Tln des Additionsproduktes aus Beispiel 4 gemischt und eine dynamische Viskosität bei $n = 62{,}5\ s^{-1}$ von 9,7 Pas gemessen.

Beispiel 18

In 410 Tln eines verzweigten Polyethers mit einer OH-Zahl von 35 mg KOH/g und einer Viskosität bei 25 °C von 830 mPas werden 15 Tle der Additionsverbindung aus Beispiel 3 gelöst und 75 Tle eines anoxidierten Gasrußes mit einer BET-Oberfläche von 110 $m^2/g$ eingerührt. Die Rußsuspension wird in einer Perlmühle mit 1 mm-Siliquarzitperlen 35 Minuten gemahlen. Man erhält eine sehr gut fließfähige Rußdispersion.

Vergleichbare Ergebnise werden erzeilt, wenn die 15 Tle der Additionsverbindung aus Beispiel 3 durch 15 Tle des Additionsproduktes aus Beispiel 10 oder durch 10 Tle des Additionsproduktes aus

Beispiel 8 und 5 Tle des in Beispiel 18 eingesetzten Polyols ersetzt werden. Diese Rußdispersionen eignen sich besonders zur Einfärbung von Polyurethan-Schaumstoffen.

**Patentansprüche**

1. Additionsverbindungen, erhältlich aus Hydroxyalkylimidazolinen der allgemeinen Formel

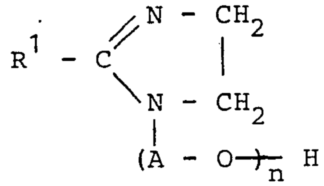

(1)

in der
$R^1$ für einen Alkyl-, Alkenyl- oder Alkapolyenylrest mit 6 bis 30 C-Atomen,
A für einen Alkylenrest mit 2 bis 6 C-Atomen und
n für eine Zahl von 1 bis 20 stehen,
Diisocyanaten der allgemeinen Formel

$$OCN—X—NCO \qquad (2)$$

worin X für einen zweiwertigen aromatischen oder araliphatischen Rest mit 6 bis 20 C-Atomen stehen, und
Polyolen der allgemeinen Formel

$$Y—[OH]—_m \qquad (3)$$

in der m für eine ganze Zahl von 2 bis 6 und Y für einen aliphatischen Rest mit mindestens 2 C-Atomen, der

durch —O—, —N—, und —CO-Gruppen sowie deren Kombinationen unterbrochen sein kann, stehen.

2. Additionsverbindungen gemäß Anspruch 1, erhältlich aus Hydroxyalkylverbindungen der allgemeinen Formel (1), in der
$R^1$ für den aliphatischen Rest natürlicher Fettsäuren,
A für eine $—CH_2—CH_2$-Gruppe und
n für 1 stehen.

3. Additionsverbindungen gemäß Anspruch 1, erhältlich aus Diisocyanaten der allgemeinen Formel (2), in der X für einen Toluylen-, Diphenylenmethan- oder Naphthylenrest steht.

4. Additionsverbindungen gemäß Anspruch 1, erhältlich aus Polyolen der allgemeinen Formel (3), in der Y für einen aliphatischen Rest mit 2 bis 12 C-Atomen steht, die durch —O— und/oder —N-Gruppen unterbrochen sein können, und m für die Zahlen 2 oder 3 steht.

5. Additionsverbindungen gemäß Anspruch 1, erhältlich aus Polyolen der allgemeinen Formel (3), in der $Y—[OH]_m$ für Hydroxyakylamine oder -amide der allgemeinen Formel

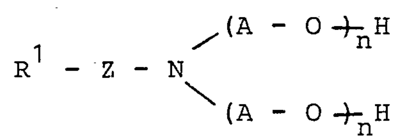

(4)

steht,
in der
$R^1$ für einen Alkyl-, Alkenyl- oder Alkapolyenylrest mit 6 bis 30 C-Atomen,
Z für eine $—CH_2—$ oder —CO-Gruppe,
A für einen Alkylenrest mit 2 bis 6 C-Atomen und
n für eine Zahl von 1 bis 20 stehen.

6. Verfahren zur Herstellung der Additionsverbindungen nach Anspruch 1, dadurch gekennzeichnet, daß das Hydroxyalkylimidazolin der Formel 1 und das Polyol der formel 3 vorgelegt werden und das Diisocyanat der Formel 2 zugegeben wird.

7. Verfahren zur Herstellung der Additionsverbindungen nach Anspruch 1, dadurch gekennzeichnet, daß zuerst das Diisocyanat mit dem Polyol umgesetzt wird und dieses Reaktionsprodukt anschließend zum Hydroxyalkylimidazolin zugegeben wird.

8. Verfahren nach Anspruch 6 und 7, dadurch gekennzeichnet, daß die Additionsreaktion in einem inerten Lösungsmittel bei Temperaturen von 0 bis 120 °C durchgeführt wird.

9. Vorfahren zur Herstellung der Additionsverbindungen nach Anspruch 8, dadurch gekennzeichnet, daß die Additionsreaktion in einem inerten Lösungsmittel bei Temperaturen von 40 bis 100 °C durchgeführt wird.

10. Verfahren zur Herstellung der Additionsverbindungen nach Anspruch 8 und 9, dadurch gekennzeichnet, daß als Lösungsmittel Kohlenwasserstoffe, chlorierte Kohlenwasserstoffe, Ester, Ether, Ketone oder Säureamide eingesetzt werden.

11. Verfahren nach Anspruch 6 und 7, dadurch gekennzeichnet, daß die Additionsreaktion bei Temperaturen von 120 °C bis 250 °C unter Abspaltung von Kohlendioxid durchgeführt wird.

12. Verfahren nach Anspruch 6, 7 und 11, dadurch gekennzeichnet, daß die Additionsreaktion in Substanz oder einem inerten Lösungsmittel mit einem Siedepunkt über 150 °C durchgeführt wird.

13. Verwendung der Additionsverbindungen nach Anspruch 1 zum Dispergieren von Feststoffen in nichtwäßrigen Medien.

14. Verwendung nach Anspruch 13 zum Dispergieren von Pigmenten und Füllstoffen in makromolekularen Stoffen.

15. Verwendung nach Anspruch 13 als Dispergator für Pigmentpräparationen zum Pigmentieren von Kunststoffen und Anstrichmedien.

16. Verwendung nach Anspruch 13 als Dispergator für Pigmentpräparationen zum Pigmentieren von Polyurethan-Schaumstoffen.

**Claims**

1. An addition compound, obtainable from a hydroxyalkylimidazoline of the general formula

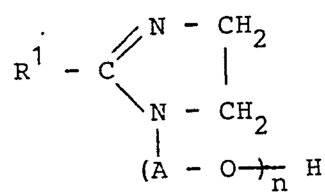

(1)

in which $R^1$ represents an alkyl, alkenyl or alkapolyenyl radical having 6 to 30 C atoms, A represents an alkylene radical having 2 to 6 C atoms and n represents a number from 1 to 20,

and a diisocyanate fo the formula

$$OCN—X—NCO \quad (2)$$

wherein X represents a bivalent aromatic or araliphatic radical having 6 to 20 C atoms,

and a polyol of the formula

$$Y—[OH]_m \quad (3)$$

in which m represents a whole number from 2 to 6 and Y represents an aliphatic radical having at least 2 carbon atoms, which can be interrupted by —O—, —N—, and —CO-groups and their combinations.

2. An addition compound as claimed in claim 1, obtainable from a hdyroxyalkyl compound of the formula (1), in which $R^1$ represents the aliphtaic radical of a natural fatty acid, A represents a $—CH_2—CH_2$-group and n represents 1.

3. An addition compound as claimed in claim 1, obtainable from a diisocyanate of the formula (2), in which X represents a toluylene, diphenylenemethane or naphthylene radical.

4. An additional compound as claimed in claim 1, obtainable from a polyol of the formula (3), in which Y represents an aliphatic radical having 2 to 12 C atoms, which can be interrupted by —O— and/or —N— groups, and m represents the number 2 or 3.

5. An addition compound as claimed in claim 1, obtainable from a polyol of the formula (3) in which $Y—[OH]_m$ represents hydroxyalkylamines or hydroxyalkylamides of the formula

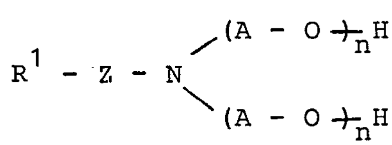

(4)

in which $R^1$ represents an alkyl, alkenyl or alkapolyenyl radical having 6 to 30 carbon atoms, Z represents a $—CH_2—$ or —CO— group, A represents an alkylene radical having 2 to 6 carbon atoms and n represents a number from 1 to 20.

6. A process for the preparation of the addition compound as claimed in claim 1, characterized by

initially introducing the hydroxyalkylimidazoline of the formula 1 and the polyol of the formula 3 and adding the diisocyanate of the formula 2.

7. A process for the preparation of the addition compound as claimed in claim 1, characterized by initially reacting the diisocyanate with the polyol and then adding this reaction product to the hydroxyalkylimidazoline.

8. The process as claimed in either of claims 6 or 7, characterized in that the addition reaction is carried out in an inert solvent at temperatures from 0 to 120 °C.

9. The process for the preparation of the addition compound as claimed in claim 8, characterized in that the addition reaction is carried out in an inert solvent at temperatures from 40 to 100 °C.

10. The process for the preparation of the addition compound as claimed in either of claims 8 or 9, characterized in that hydrocarbons, chlorinated hydrocarbons, esters, ethers, ketones or acid amides are employed as the solvents.

11. The process as claimed in either of claims 6 or 7, characterized in that the addition reaction is carried out at temperatures from 120 °C to 250 °C, with carbon dioxide being split off.

12. The process as claimed in any of claims 6, 7 or 11, characterized in that the addition reaction is carried out in bulk or in an inert solvent having a boiling point above 150 °C.

13. The use of the addition compound as claimed in claim 1 for dispersing solid materials in nonaqueous media.

14. The use as claimed in claim 13 for dispersing pigments and fillers in macromolecular materials.

15. The use as claimed in claim 13 as a dispersant for pigment preparations for pigmenting plastics and coating media.

16. The use as claimed in claim 13 as a dispersant for pigment preparations for pigmenting polyurethane foam materials.

**Revendications**

1. Composés d'addition qui peuvent être obtenus à partir d'(hydroxyalkyl)-imidazolines répondant à la formule générale 1 :

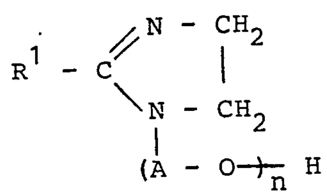

(1)

dans laquelle

$R^1$ représente un radical alkyle, alcényle ou alcapolyényle contenant de 6 à 30 atomes de carbone,

A représente un radical alkylène contenant de 2 à 6 atomes de carbone et

n représente un nombre de 1 à 20,

— de di-isocyanates répondant à la formule générale 2 :

$$OCN—X—NCO \qquad (2)$$

dans laquelle X représente un radical aromatique ou araliphatique bivalent qui contient de 6 à 20 atomes de carbone,

et

— de polyols répondant à la formule générale 3 :

$$Y—[OH]_m \qquad (3)$$

dans laquelle

m représente un nombre entier de 2 à 6, et

Y représente un radical aliphatique contenant au moins deux atomes de carbone, radical qui peut être interrompu par des radicaux —O, —N— et —CO— ainsi que par des associations de tels radicaux.

2. Composés d'addition selon la revendication 1, qui peuvent être obtenus à partir de composés hydroxyalkyliques de formule générale 1 dans lesquels :

$R^1$ représente le radical aliphatique d'acides gras naturels,

A représente un radical $—CH_2—CH_2-$ et

n est égal à 1.

3. Composés d'addition selon la revendication 1, qui peuvent être obtenus à partir de di-isocyanates de formule générale 2 dans lesquels X représente un radical toluylène, diphénylène-méthane ou naphtylène.

4. Composés d'addition selon la revendication 1, qui peuvent être obtenus à partir de polyols de formule générale 3 dans lesquels Y représente un radical aliphatique contenant de 2 à 12 atomes de carbone, éventuellement interrompu par des radicaux —O— et/ou —N—, et m désigne le nombre 2 ou le nombre 3.

5. Composés d'addition selon la revendication 1, qui peuvent être obtenus à partir de polyols de formule générale 3, c'est-à-dire de formule $Y—[OH]_m$, qui sont des hydroxyalkyl- amines ou hydroxyalkylamides répondant à la formule générale 4 :

$$R^1 - Z - N \begin{matrix} \diagup (A - O)_n H \\ \diagdown (A - O)_n H \end{matrix} \qquad (4)$$

dans laquelle

$R^1$ représente un radical alkyle, alcényle ou alcapolyényle contenant de 6 à 30 atomes de carbone,
Z représente un radical $—CH_2—$ ou —CO—,
A représente un radical alkylène contenant de 2 à 6 atomes de carbone et
n désigne un nombre de 1 à 20.

6. Procédé pour préparer des composés d'addition selon la revendication 1, procédé caractérisé en ce qu'on place dès le départ, dans le récipient réactionel, l'(hydroxyalkyl)-imidazoline de formule 1 et de polyol de formule 3, puis on ajoute le di-isocyanate de formule 2.

7. Procédé de préparation des composés d'addition selon la revendication 1, procédé caractérisé en ce qu'on fait d'abord réagir le di-isocyanate avec le polyol, puis on ajoute le produit réactionnel ainsi obtenu à l'(hydroxy-alkyl)-imidazoline.

8. Procédé selon l'une des revendications 6 et 7, caractérisé en ce qu'on effectue la réaction d'adition dans un solvant inerte, à des températures de 0 à 120 °C.

9. Procédé de préparation de composés d'addition selon la revendication 8, procédé caractérisé en ce qu'on effectue la réaction d'addition dans un solvant inerte, à des températures de 40 à 100 °C.

10. Procédé de préparation de composés d'addition selon l'une des revendications 8 et 9, procédé caractérisé en ce qu'on utilise, comme solvants, des hydrocarbures, des hydrocarbures chlorés, des esters, des éthers, des cétones ou des amides.

11. Procédé selon l'une des revendications 6 et 7, caractérisé en ce que la réaction d'addition est effectuée à des températures de 120 à 250 °C et est accompagnée d'un dégagement de dioxyde de carbone.

12. Procédé selon l'une quelconque des revendications 6, 7 et 11, procédé caractérisé en ce qu'on effectue la réaction d'addition en substance ou dans un solvant inerte ayant un point d'ébullition supérieur à 150 °C.

13. Application des composés d'addition selon la revendication 1 pour la mise en dispersion de matières solides dans des milieux non aqueux.

14. Application selon la revendication 13 pour la mise en dispersion de pigments et de charges dans des matières macromoléculaires.

15. Application selon la revendication 13 dans laquelle on utilise lesdits composés d'addition comme dispersants pour des compositions pigmentaires destinées à la pigmentation de matières plastiques et de milieux pour peintures.

16. Application selon la revendication 13 selon laquelle on utilise lesdits composés d'addition comme dispersants pour des compositions pigmentaires destinées à la pigmentation de mousses en polyuréthannes.